# EUROPEAN PATENT SPECIFICATION

(11) **EP 3 743 647 B1**
(45) Date of publication and mention of the grant of the patent: **19.10.2022**
(21) Application number: 18826257.0
(22) Date of filing: 14.12.2018
(51) Int. Cl.: F16L 11/12, F16L 11/08, G09F 3/00, G09F 3/20

(54) **GARDEN HOSE WITH LABEL**
GARTENSCHLAUCH MIT ETIKETT
TUYAU FLEXIBLE D'ARROSAGE AVEC ÉTIQUETTE

(30) Priority: 26.01.2018 DE 102018000613
(43) Date of publication of application: 02.12.2020
(73) Proprietor: HUSQVARNA AB, 561 82 Huskvarna (SE)
(72) Inventor: RAUCH, Martin, 70191 Stuttgart (DE)
(74) Representative: Finkele, Rolf
(86) International application number: PCT/EP2018/084934
(87) International publication number: WO 2019/145088

(56) References cited:
- EP-A1- 1 818 895
- WO-A1-2006/116826
- WO-A1-2016/141180
- WO-A1-2016/172019
- US-B1- 6 269 573

## Description

### TECHNICAL FIELD

The present disclosure relates to product labels. More specifically, the present disclosure relates to a label which can be highly applicable with hoses among other common products.

### BACKGROUND

Products of various brands and labels are ubiquitous in today's world. With the advent of marketing and branding, such products are increasingly finding ingenious ways to better target their audience and further unearth any possible leads. In absence of quality marketing, there have been cases of possible frauds and irreputable business which may point to a need for better information dissipation to a common user.

However, at times there are constraints to properly and widely market some goods due to the nature or type of material employed by such goods. In such scenarios, there is a requirement to better label the products without compromising on critical factors such as safety, wherewithal's, operating life of the product to name a few. One prominent sphere of branding remains in garden products which can be widely marketed by an increased ability to label on components (say a hose) of the garden products.

An example of a hose assembly is provided by WO2016172019 (hereinafter referred to as '019 reference). The '019 reference provides a hose assembly which includes a jacketed tube that is lightweight, durable and versatile. The tube can expand longitudinally along the length-wise axis of the hose between hose ends, as well as radially or circumferentially, to an expanded state in response to application of at least a minimum fluid pressure to an inner tube of the hose. The two-layer construction of the hose assembly provides benefits such as compact storage, similar flow rates, weight reduction, and improved maneuverability etc. A possibility on how to attach any indicia such as brand information or other specification to the hose is nether mentioned nor suggested.

### SUMMARY

In view of the above, it is an objective of the present invention to solve or at least reduce the drawbacks discussed above. The objective is at least partially achieved by the hose assembly claimed. The hose assembly includes an inner tube made up of at least a first material. It is well known to the one skilled in the art that a tube, in particular a watering hose, could be formed by only one material but could also consist of multiple layers of different material. The hose assembly further includes an outer tube made up of at least a second material. The outer tube covers the inner tube. The hose assembly is characterized in that a label is coupled to the outer tube. The label has at least one planar member which includes a front side, and a rear side. Moreover, the label includes an indicia provided on at least one of the front side and the rear side of the planar member. Thus, the present disclosure provides a simple, aesthetically pleasing, compact and convenient arrangement of branding with the label for the hose assembly.

According to the present invention, the label is coupled to the outer tube by welding or by stitching.

Use of fabrication processes such as welding may be preferable keeping into account the nature (or material) of any or both the outer tube and the label. Preference for stitching can be attributed to simplicity and cost-effectiveness in manufacturing as well as maintenance of products made through this process.

According to an embodiment of the present invention, the label is of a rectangular shape, and the label is coupled to the outer tube on one of the sides of the label. Shape and coupling of the label will usually depend more upon visibility and aesthetical factors over other general considerations.

According to an embodiment of the present invention, the label is a loop. This can make the label applicable for auxiliary roles such as hanging, holding among regular marketing and other benefits.

According to an embodiment of the present invention, the loop has two planar members joined at ends to define the loop. This can provide strength and enhanced area such for multiple insignia or any other requirement.

According to an embodiment of the present invention, the first material is selected from one or more of a thermoplastic, and an elastomeric material. Such material can be preferred from factors such as cost, maintenance, safety and the like.

According to an embodiment of the present invention, the at least second material is selected from one or more of a metal, and a textile material. Choice of material for the outer tube shall be more demanding, preferably on top of the factors such as cost, maintenance, safety and the like.

According to the present invention, the label is made of a material selected from one or more of a textile, and a plastic. Material of the label shall be long-lasting and visibly-distinguishable for enhanced and quick effect on a target audience or a product user.

According to an embodiment of the present invention, the indica includes one or more of a brand information, a company logo, and specifications of the hose assembly. Manufacturing or marketing factors, among others, will usually have a bearing on the specifics of the indica mentioned here for applicability on the label.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a water supply system from a water tap to a sprayer through a hose assembly, in accordance with an embodiment of the present invention;
**FIG. 2** shows a perspective view of the hose assembly with a label, in accordance with an embodiment of the present invention; and
**FIG. 3** shows a perspective view of the hose assembly with a label, in accordance with another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention, the scope of the invention being set forth in the following claims.

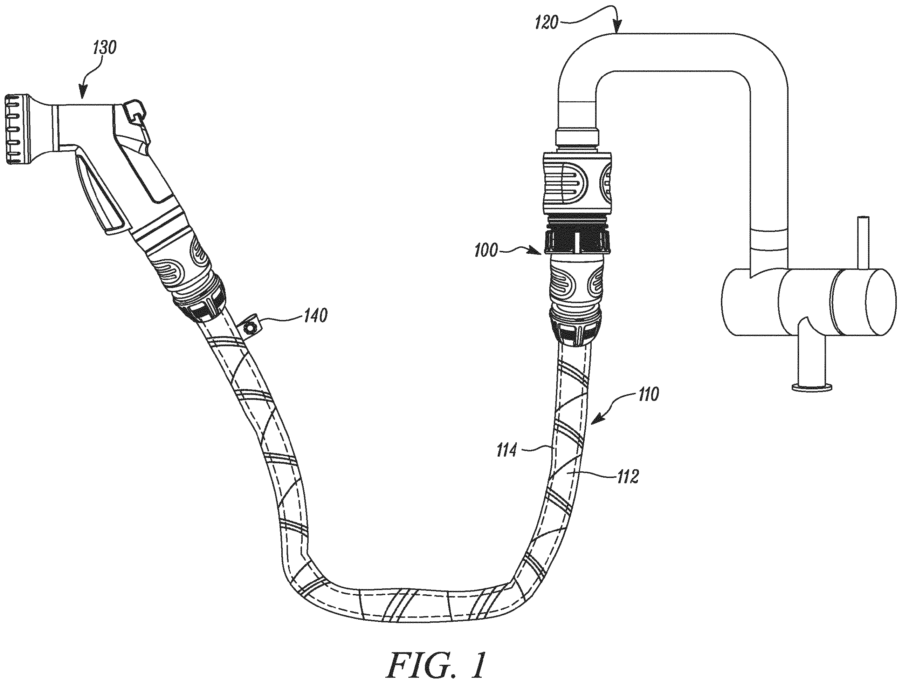

**FIG. 1** illustrates a connector assembly **100** for connecting to a hose assembly **110.** The hose assembly includes an inner tube **112** made up of a first material. In some embodiments, the first material is selected from one or more of a thermoplastic, and an elastomeric material; or could even consist of multiple layers of different materials. The hose assembly **110** includes an outer tube **114** made up of at least a second material. Further, the at least second material is selected from one or more of a metal, and a textile material. Choice of the at least first material and the at least second material may depend upon various operational, aesthetics, or any other factors. Such materials can be preferred from factors such as cost, maintenance, safety and the like. With most embodiments the inner layer is not visible from outside but will be invisible covered by a non-transparent outer layer. However, it should be contemplated that the present disclosure is not limited by the choice of the at least first material or the at least second material in any manner. In particular with some embodiments the outer tube being sort of a mesh could consist of a second material that is a mix of different basic material, such as textile and metal.

The outer tube **114** covers the inner tube **112.** During working, the connector assembly **100** is used to connect the hose assembly **110** to a water tap **120.** The hose assembly **110** can be any universal pipe as used or known in the art. Further, the hose assembly **110** is generally connected to a connecting tool such as a sprayer **130** illustrated in the figure, although other connecting tools have been contemplated and are well within the scope of the present disclosure. Further, the hose assembly **110** includes a label **140** with one or more planar members.

The hose assembly **110** has the label **140** which is coupled to the outer tube **114.** The label **140** has at least one planar member which includes a front side (as visible in the **FIG. 1****),** and a rear side (opposite to the front side and not visible here). Moreover, the label **140** includes an indicia provided on at least one of the front side and the rear side of the planar member. Notably, the indica includes one or more of a brand information, a company logo, specifications of the hose assembly or any other information as considered relevant by a person having ordinary knowledge in the art. It should be contemplated that the present disclosure is not limited by the type of information provided on the label **140** in any manner.

As used herein, the hose assembly **110** of the present disclosure can be any pipe, hose or tube with multiple number of tubes. More importantly, in accordance with an implementation of the present disclosure, there can be one or more label **140** on the hose assembly **110** as would be required to suit different setups.

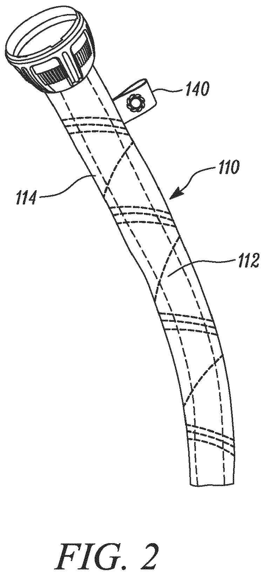

**FIG. 2** shows a perspective view of the label **140** as a loop, in accordance with an embodiment of the present invention. The loop can have two planar members joined at ends to define the loop. This can provide strength and enhanced area such for multiple insignia and improve applicability for auxiliary roles such as hanging, holding among other benefits.

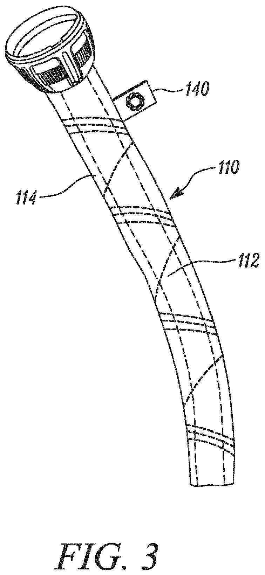

**FIG. 3** shows a perspective view of the label **140** of the hose assembly **110,** in accordance with an embodiment of the present invention. The label **140** can be of any shape such as square, circular, oval, or as a rectangular shape shown in this figure. Further, the label **140** can be coupled to the outer tube **114** on one of the sides of the label **140.** Shape and coupling of the label **140** will usually depend on factors relating to visibility, aesthetics, quality among other general considerations.

According to the invention, the label **140** can be coupled to the outer tube **114** by welding or by stitching. Preference for welding or stitching can be attributed to different factors involved in manufacturing as well as maintenance of products made through these processes.

According to the invention, the label **140** is made of a material selected from one or more of a textile, and a plastic. Material of the label **140** shall preferably be long-lasting and visibly-distinguishable for enhanced and quick effect on a target audience or a product user.

### LIST OF ELEMENTS

- **100**: Connector Assembly
- **110**: Hose Assembly
- **112**: Inner Tube
- **114**: Outer Tube
- **120**: Water Tap
- **130**: Sprayer
- **140**: Label

## Claims

1. A garden hose assembly **(110)** with a connector assembly (100) comprising:
an inner tube **(112)** comprising of at least a first material;
an outer tube **(114)** comprising of at least a second material, wherein the outer tube **(114)** covers the inner tube **(112),**
**characterized in that**
a label **(140)** is coupled to the outer tube **(114),** wherein the label **(140)** has at least one planar member including:
a front side;
a rear side; and
an indicia provided on at least one of the front side and the rear side of the
planar member,
wherein the label **(140)** is coupled to the outer tube **(114)** through a lateral edge by welding or by stitching and is made of a material selected from one or more of a textile, and a plastic.

2. The garden hose assembly **(110)** of claim **1,** wherein the label **(140)** is of a rectangular shape, and the label **(140)** is coupled to the outer tube **(114)** on one of the sides of the label **(140).**

3. The garden hose assembly **(110)** of claim **1,** wherein the label **(140)** is a loop.

4. The garden hose assembly **(110)** of claim **3,** wherein the loop has two planar members joined at ends to define the loop.

5. The garden hose assembly **(110)** of any of the preceding claims, wherein the at least first material is selected from one or more of a thermoplastic, and an elastomeric material.

6. The garden hose assembly **(110)** of any of the preceding claims, wherein the at least second material is selected from one or more of a metal, and a textile material.

7. The garden hose assembly **(110)** of any of the preceding claims, wherein the indicia includes one or more of a brand information, a company logo, and specifications of the hose assembly **(110).**

## Patentansprüche

1. Eine Gartenschlauchanordnung (110) mit einer Verbindungsanordnung (100), die Folgendes umfasst:
ein inneres Rohr (112), das aus mindestens einem ersten Material besteht;
ein äußeres Rohr (114), das aus mindestens einem zweiten Material besteht, wobei das äußere Rohr (114) das innere Rohr (112) bedeckt,
**dadurch gekennzeichnet, dass**
ein Etikett (140) an das äußere Rohr (114) gekoppelt ist, wobei das Etikett (140) mindestens ein planares Element aufweist, das Folgendes umfasst:
eine Vorderseite;
eine Rückseite; und
eine Kennzeichnung, die auf der Vorderseite und/oder der Rückseite des planaren Elements angebracht ist,
wobei das Etikett (140) mit dem äußeren Rohr (114) über einen seitlichen Rand durch Schweißen oder Nähen verbunden ist
und aus einem Material besteht, das aus einem oder mehreren Textilien und einem Kunststoff ausgewählt ist.

2. Die Gartenschlauchanordnung (110) nach Anspruch 1, wobei das Etikett (140) eine rechteckige Form hat und das Etikett (140) an einer der Seiten des Etiketts (140) mit dem äußeren Rohr (114) verbunden ist.

3. Die Gartenschlauchanordnung (110) nach Anspruch 1, wobei das Etikett (140) eine Schleife ist.

4. Die Gartenschlauchanordnung (110) nach Anspruch 3, wobei die Schleife zwei planare Elemente aufweist, die an den Enden verbunden sind, um die Schleife zu bilden.

5. Die Gartenschlauchanordnung (110) nach einem der vorhergehenden Ansprüche, wobei das mindestens erste Material ausgewählt ist aus einem oder mehreren von einem thermoplastischen und einem elastomeren Material.

6. Die Gartenschlauchanordnung (110) nach einem der vorhergehenden Ansprüche, wobei das mindestens zweite Material ausgewählt ist aus einem oder mehreren von einem Metall und einem textilen Material.

7. Die Gartenschlauchanordnung (110) nach einem der vorhergehenden Ansprüche, wobei die Kennzeichnung eine oder mehrere Markeninformationen, ein Firmenlogo und Spezifikationen der Schlauchanordnung (110) enthält.

## Revendications

1. Ensemble de tuyau d'arrosage **(110)** avec un ensemble connecteur **(100)** comprenant :
un tube interne **(112)** comprenant au moins un premier matériau ;
un tube extérieur **(114)** comprenant au moins un second matériau, dans lequel le tube extérieur **(114)** recouvre le tube intérieur **(112),**
**caractérisé en ce que**
une étiquette **(140)** est couplée au tube extérieur **(114),** dans lequel l'étiquette **(140)** a au moins un élément plan comprenant :
un côté avant ;
un côté arrière ; et
un indice prévu sur au moins l'un du côté avant et du côté arrière de l'élément plan,
dans lequel l'étiquette **(140)** est couplée au tube extérieur **(114)** à travers un bord latéral par soudage ou par couture et est faite d'un matériau choisi parmi un ou plusieurs éléments parmi un textile et un plastique.

2. Ensemble de tuyau d'arrosage **(110)** selon la revendication 1, dans lequel l'étiquette **(140)** est de forme rectangulaire, et l'étiquette **(140)** est couplée au tube extérieur **(114)** sur l'un des côtés de l'étiquette **(140).**

3. Ensemble de tuyau d'arrosage **(110)** selon la revendication 1, dans lequel l'étiquette **(140)** est une boucle.

4. Ensemble de tuyau d'arrosage **(110)** selon la revendication 3, dans lequel la boucle a deux éléments plans joints aux extrémités pour définir la boucle.

5. Ensemble de tuyau d'arrosage **(110)** selon l'une quelconque des revendications précédentes, dans lequel l'au moins premier matériau est choisi parmi un ou plusieurs d'un matériau thermoplastique et d'un matériau élastomère.

6. Ensemble de tuyau d'arrosage **(110)** selon l'une quelconque des revendications précédentes, dans lequel l'au moins second matériau est choisi parmi un ou plusieurs éléments parmi un métal et un matériau textile.

7. Ensemble de tuyau d'arrosage **(110)** selon l'une quelconque des revendications précédentes, dans lequel l'indice comprend une ou plusieurs informations de marque, un logo d'entreprise et des spécifications de l'ensemble d'arrosage (110).
